Europäisches Patentamt

(19) European Patent Office

Office européen des brevets

(11) **EP 0 960 647 B1**

(12) **EUROPEAN PATENT SPECIFICATION**

(45) Date of publication and mention
of the grant of the patent:
**27.08.2003   Bulletin 2003/35**

(51) Int Cl.[7]: **B01D 53/28**, B01J 20/02,
C01B 35/10

(21) Application number: **99830303.6**

(22) Date of filing: **17.05.1999**

(54) **Process for the removal of water from evacuated chambers or from gases**

Verfahren zur Abtrennung von Wasser aus Vakuumkammern oder aus Gasen

Procédé pour l'élimination d'eau de chambres sous vide ou de gaz

(84) Designated Contracting States:
**BE DE FR GB NL SE**

(30) Priority:  **21.05.1998  IT   MI981138**

(43) Date of publication of application:
**01.12.1999   Bulletin 1999/48**

(73) Proprietor: **SAES GETTERS S.p.A.**
**Lainate (Milano) (IT)**

(72) Inventors:
 • **Battilana, Paolo**
   **20038 Seregno (IT)**
 • **Vergani, Giorgio**
   **20052 Monza (IT)**
 • **Boffito, Claudio**
   **20017 Rho (IT)**
 • **Succi, Marco**
   **20131 Milano (IT)**
 • **Toia, Luca**
   **21052 Busto Arsizio (IT)**

(74) Representative: **Adorno, Silvano et al**
   **c/o SOCIETA' ITALIANA BREVETTI S.p.A.**
   **Via Carducci, 8**
   **20123 Milano (IT)**

(56) References cited:
   **EP-A- 0 428 898**        **EP-A- 0 654 442**
   **EP-A- 0 707 360**        **GB-A- 1 278 466**

EP 0 960 647 B1

**Description**

The present invention relates to a process for the removal of water from evacuated chambers or from gases by means of boron oxide obtained by boric acid decomposition under vacuum or under a dry gas flow.

Although the process of the invention could be employed for sorbing liquid water, the important industrial applications concern water vapor sorption; in the following text both water in liquid form and the vapor thereof are meant by the term water, with particular reference to the latter.

As it is known, water is one of the main pollutants in systems where vacuum is performed or in pure gases, these latter being mainly used in microelectronics industry.

The industrial applications wherein water removal is requested are various. Water is one of the gases which have to be removed from evacuated systems employed for thermal insulation, such as the vitreous or metallic gaps in thermos flasks or the evacuated panels filled with polymeric materials for refrigerators; the use of gas sorbing materials inside such panels is disclosed e.g. in the patent US 5.544.490. Other applications are in water sorption in mechanical microdevices, known as micromachines, and in polymer-encapsulated integrated circuits; one example of the use of sorbents for gases, among which water, in the latter devices is given in patent US 4.768.081. An important application is in laser devices, such as power lasers used in amplifiers for optical fiber communications (in the following simply referred to as optical amplifiers); these devices are formed of a sealed chamber, wherein the laser source is contained; a controlled static atmosphere of an inert gas, generally nitrogen, must be maintained in the chamber. Immediately upon its manufacture, the optical amplifier chamber contains hydrocarbon impurities as a residue of the production process, affecting the device correct operation. In order to eliminate these impurities, nitrogen is added with small amounts of oxygen which, by reacting with the hydrocarbons, generates water and $CO_2$; the latter does not interfere with the optical amplifier operation, and therefore water turns out to be the only gas which has to be removed from the nitrogen atmosphere. This use is disclosed in the patent application EP-A-707.360. In all the above-mentioned devices water can result either as a residue of the production process, or it can be formed *in situ*, such as in the case of optical amplifiers.

Further, water removal is extremely important in case of pure gases, which are mainly used in microelectronics industry both as reagents for the manufacture of layers having electric functionality (for example, insulating layers of $SiO_2$ obtained by oxidizing $SiCl_4$), and for the selective removal of portions of these layers to obtain the microstructures of the integrated electronic devices. The purity levels requested for these process gases are higher and higher, because molecules of gases different from the process ones are left inside the materials of the devices, thus forming defects which alter locally the electrical properties of the device and causing production wastes. For example, noble gases (above all helium and argon) having contents of impurities lower than about 5 parts per billion (ppb) are at present requested. The presence of water traces is then particularly serious when the gas is halogen or a halogen containing gas, such as chlorine, hydrogen fluoride, hydrogen chloride, hydrogen bromide, silicon tetrachloride, trichlorosilane and dichlorosilane; in facts these gases, widely used in microelectronics industry, give rise in the presence of water to corrosion phenomena of gas pipelines and reaction chambers.

Water removal from evacuated chambers or from gases can be carried out by means of chemical or physical kinds of sorbents.

For example, sorbents of physical kind are zeolites, porous alumina and silica gel. These sorbents are not suitable for many high technology applications, because they provide for a reversible sorption of water (as well as of the other gases), and the sorbed gases can be released in the presence of a high vacuum or as a consequence of heating; further, for instance in the case of HCl purification, this gas is also sorbed by the zeolites, thus competing with water which is not efficiently removed.

Chemical moisture sorbents have been known for a long time; the most effective are alkaline-earth metal oxides, particularly barium and calcium oxides; magnesium perchlorate and barium perchlorate; copper sulfate; calcium and zinc chlorides; and phosphorus pentoxide. These materials are not all suitable in all the afore-said applications; for example, alkaline-earth metal oxides are basic and therefore shall not be used for removing water from halogen or halogenated gases because they react with these gases.

Other materials useful for moisture chemical sorption are zirconium- or titanium-based alloys, generally known as non-evaporable getter alloys; these alloys sorb a wide range of gases, such as $O_2$, CO, $CO_2$, and water. However, the sorbing capacity at room temperature is very limited; besides, these materials shall not be used to purify reactive gases, such as the above-mentioned halogen and halogenated gases, because of their reactivity towards these gases and because they form, by contacting these gases, metal halides which are then found in the flow downstream of the purifier.

The particularly felt problem of water removal from halogen or halogenated gases brought to the research and development of new materials. Patents US 4.853.148 and US 4.925.646 disclose water removal from HF, HCl, HBr and HI by means of supported metal halides of general formula $MX_y$, wherein X is a halogen and y stands for the valence of the metal M, which is mono-, di- or trivalent. The metal halides can also be covalently bonded to the support, in form of radicals -$MX_{y-1}$. US patent 4.867.960 discloses water removal from HCl by means of $SiCl_4$ or of a chloride of an at least tetravalent metal, optionally supported. Finally, US patent 5.057.242 discloses the removal of water and complex chlorosiloxanes from chlorosilanes by using materials of general formula $R_{a-x}MCl_x$, wherein R is an alkyl, x is in the range from 0 to a, and M is a metal selected among alkali metals, alkaline-earth metals and aluminum.

EP 0 428 898 A1 shows an oxygen and moisture absorbent comprising boron or reducing boron compounds, e.g. borides.

Object of the present invention is to provide a process for water removal from evacuated chambers or from gases.

This object is obtained according to the present invention by means of a process comprising the following steps:

- producing boron oxide by boric acid decomposition at a temperature in the range from 70 to 200°C, by operating in a reaction chamber under a dry gas flow or at a pressure lower than 500 mbar; and
- contacting the resulting boron oxide with the evacuated chamber or with the gas from which water has to be removed.

The invention will be disclosed in the following with reference to the Figures wherein:

- Fig. 1 shows a graph wherein two weight increase curves are plotted, resulting from water sorption under vacuum, one of which relates to the process of the invention and the other is comparative;
- Fig. 2 shows a FT-IR spectrum of HCl from which water has been removed according to the process of the invention;
- Fig. 3 shows a FT-IR spectrum of wet HCl;
- Fig. 4 shows a graph wherein one weight increase curve is plotted, resulting from water sorption relating to an alternative possible embodiment of the process of the invention.

Boron oxide is a commonly commercially available product employed mainly as a vitrification agent in the production of glass of mixed composition, but it had never been industrially employed for water sorption.

The production of boron oxide by boric acid decomposition at a pressure lower than the atmospheric one, according to the reaction:

$$2\,H_3BO_3 \rightarrow B_2O_3 + 3\,H_2O \qquad (I)$$

was previously known from chemistry handbooks, such as "Inorganic Syntheses", written by W.Conard Fernelius, vol. II, McGraw-Hill, 1946, pages 22-23; this text indicates 200°C as the decomposition temperature of boric acid. Although in the above reaction the starting reagent is orthoboric acid, $H_3BO_3$, also metaboric acid, $HBO_2$, which is by the way intermediate in the total reaction (I), can be employed by the process of the invention; any one of the two above recalled forms of boric acid is meant by the general definition of boric acid in the description and in the claims.

The first step of the process of the invention consists in boric acid decomposition, according to reaction (I).

The temperature during reaction (I) can vary in the range of about 70 to 200°C; at lower temperatures the reaction rate is negligible, while at temperatures higher than the indicated ones the boron oxide being formed shows a reduced porosity, resulting in a worsening of the water sorption characteristics.

In the case of dry gas flow decomposition, the gas flow is preferably higher than $5xC$ $cm^3/min$, wherein C is the volume of the reaction chamber measured in $cm^3$. High flow rates guarantee an effective removal of the water produced by boric acid decomposition, and therefore a low water partial pressure in chamber, thus enhancing complete decomposition. As dry gases, noble gases can be used, but preferably nitrogen or air are preferred on economical grounds.

According to one preferred embodiment of the process of the invention, reaction (I) is carried out at a reduced pressure, in a chamber connected by means of a porous septum to a vacuum pump. The decomposition reaction can be carried out at pressures of 500 mbar or less; lower pressures allow faster reactions. Since the reaction releases water vapor, the vacuum has to be dynamic, that is the reaction has to be carried out under continuous pumping, such as by using a rotary pump. The use of the porous septum is intended to prevent powder of boric acid, or of the oxide being formed, from being sucked in the pumping line; the porous septum can be e.g. a disk of sintered metal powders.

Boric acid is preferably laid in the reaction chamber so that the bed of material to be treated has a low thickness; in fact, high thickness values of the boric acid bed have been found to slow down the water emission, and can cause an incomplete decomposition of the acid which is positioned in the lower portion of the reaction bed. Preferably, the reaction bed height is less than 1 cm. On the contrary, an increase of the surface of the boric acid bed enhances the reaction, which therefore is preferably carried out by forming a thin and wide acid bed; arranging in the reaction chamber a plurality of boric acid beds stacked one over the other is also possible.

In many of the above recalled industrial applications, boron oxide can not be contacted with the evacuated volume or with the gas as a loose powder, but it must be enclosed in a container permeable by gases, but able to seal out powders, in order to avoid their interference with the operation of the devices. In this case, particularly when small quantities of the material are required by the intended use of the boron oxide, it is possible to prepare the oxide by decomposing boric acid directly inside the final gas permeable container. The container can for instance be formed of a steel portion having a concavity and closed by a porous septum, for instance of the kind made of sintered steel powder. A device of this kind is disclosed e.g. in the patent application WO 97/19894, in the name of the Applicant, which is referred to for greater details. This procedure is advantageous because boric acid can be more easily compacted by compression than boron oxide, so that it is easy to produce acid pellets which subsequently can be inserted into the container having a portion of the surface easily permeable by gases; a water sorbing device able to contain the powders of boron oxide is directly obtained by carrying out the acid decomposition in such a container. In this case it is also possible to eliminate the porous septum between reaction chamber and pumping line, because powder transportation is avoided by the presence of the porous septum of the device permeable wall.

Boron oxide, produced according to one of the so far described methods, is then contacted with the evacuated volume or with the gas from which water has to be removed.

In simple applications, such as in refrigerator jackets, boron oxide could be used in the form of a loose powder, while in all the other applications (such as optical amplifiers) confinement of the powders by a suitable gas permeable container is requested. Even when employment of the loose powders would be possible, use of a container could be preferred because of the practicality of employment in automated production lines.

The employment temperature can vary in the range of 0 to 120°C; though, when operating under vacuum is preferable to limit the upper temperature to maximum values of about 80°C, in order to avoid release of the previously sorbed water. The water sorption characteristics of boron oxide worsen at temperatures higher than those indicated. The lower temperature limit is on the contrary independent on the material characteristics, being essentially due to water condensation at temperatures below 0°C, which does not any more allow water vapor transportation onto boron oxide.

In the case of water removal from evacuated volume or static gas, boron oxide is preferably used inside of a gas permeable container as above described. In the particular case of optical amplifiers the use of boron oxide according to the invention offers a particular advantage, compared to the known systems: during the sealing of these devices, which is carried out at temperatures of about 100°C, an evacuating operation is provided, by means of pumping; as a consequence, if boron oxide during the previous productive steps had sorbed water by exposition to the atmosphere, it is regenerated during this operation, thus eliminating the need for all the production steps to be carried out in an evacuated chamber.

In the case of water removal from flows of gas used in the microelectronics industry processes the contact between gas and boron oxide is carried out by laying boron oxide inside a container open at two opposite ends, and flowing the gas inside the container with the two open ends used as the inlet of the impure gas and the outlet of the purified gas; the whole, consisting of container and oxide, forms a purifier, which can have varying sizes from the small purifiers of a few centimeters, generally used upstream of and next to the process chambers, to purifiers of the volume in the order of cubic meters. Purifiers useable in the process of the invention can be manufactured according to procedures known in the field, for instance by employing stainless steel for the body of the purifier with internal electropolished surfaces. Porous septa are preferably positioned at the inlet and outlet of the purifier, thus preventing boron oxide powder from being carried along the gas line. Patent GB 2.177.079, e.g., is referred to for details relating to the manufacture of a gas purifier.

Using the process of the invention provides for some advantages with respect to water removal from gas flows carried out by known methods. First, boron oxide does not require any supporting material, thus minimizing the volume occupied by the purifier, with the active material weight being equal. Besides, boron oxide in the process of the invention has an open structure, which allows reduced load losses downstream of the purifier. Boron oxide is effective in water removal at room temperature, thus simplifying manufacture and use of purifiers that do not need heaters.

The process of the invention also provides specific advantages, with respect to the already known processes, in the particular case of water removal from halogens or halogenated gases. All the processes described in the afore-mentioned US patents involve an activating or conditioning operation of the material employed for the purification, before use; such operations are not required by the process of the present invention. Further, the known processes often require use of the active material in supported form: besides the above-mentioned inconvenience of the increased volume due to the presence of a support, such a support is often alumina, which at high halogenated gas pressures can react with the gas itself, thus producing volatile aluminum trihalides which are then found in the gas flow from the purifier outlet, which is therefore polluted. This fact reduces employment of the purifiers which make use of the known processes at low gas pressure values, reduction which is not present with the process of the present invention.

The invention will be further illustrated by the following examples. These non-limiting examples illustrate some embodiments intended to teach those skilled in the art how to put the invention into practice and how to provide the best considered way for carrying out the invention.

## EXAMPLE 1

This example refers to preparation of boron oxide by boric acid decomposition under vacuum.

100 g of powdered $H_3BO_3$ of purity 99.5%, sold by the firm Aldrich, Milan, catalogue number 23,646-2, are spread over a surface of about 0.3 $m^2$ in a steel container; the boric acid bed thickness is about 3 mm. The container is introduced into a vacuum oven. By means of a rotary pump the oven pressure is brought to $6.7 \times 10^{-2}$ mbar, and by operating under continuous pumping the following thermal treatment is performed:

- heating of 1°C/min from room temperature to 120°C;
- maintaining at 120°C for 6 hours;
- heating of 2°C/min up to 140°C;
- maintaining at 140°C for 17 hours.

During the treatment the oven pressure reaches a maximum value of about 2 mbar following water release. This powder constitutes sample 1. The test is repeated in parallel in a CAHN thermobalance, model D 200, using 50 mg of boric acid. A mass spectrometer, branching from the pumping line, is connected to the thermobalance, proving that only water is released during the test. The weight loss of the sample at the end of the test is about 44.1%, against a theoretical value of 43.7% for the decomposition of boric acid to boron oxide; the difference can be ascribed to the starting boric acid containing physically sorbed water. The thermobalance test results confirm that sample 1 is formed of boron oxide.

## EXAMPLE 2

This example refers to the preparation of boron oxide by boric acid decomposition in a dry gas flow.

The procedure described in example 1 is repeated, with the difference that operations are carried out in a nitrogen flow of 1 standard liter per minute (slpm) instead of under vacuum. In order to guarantee the absence of water from the nitrogen flow, this latter is passed, upstream of the reaction oven, on a powder bed of an alloy having weight composition Zr 76.5% - Fe 23.5%, maintained at 350°C; this alloy is produced and sold from the applicant under the name St 198, and it is known in the field for its capacity to remove, among others, oxygenated gases. The resulting powder forms sample 2.

## EXAMPLE 3

This example refers to water sorption under vacuum by sample 1.

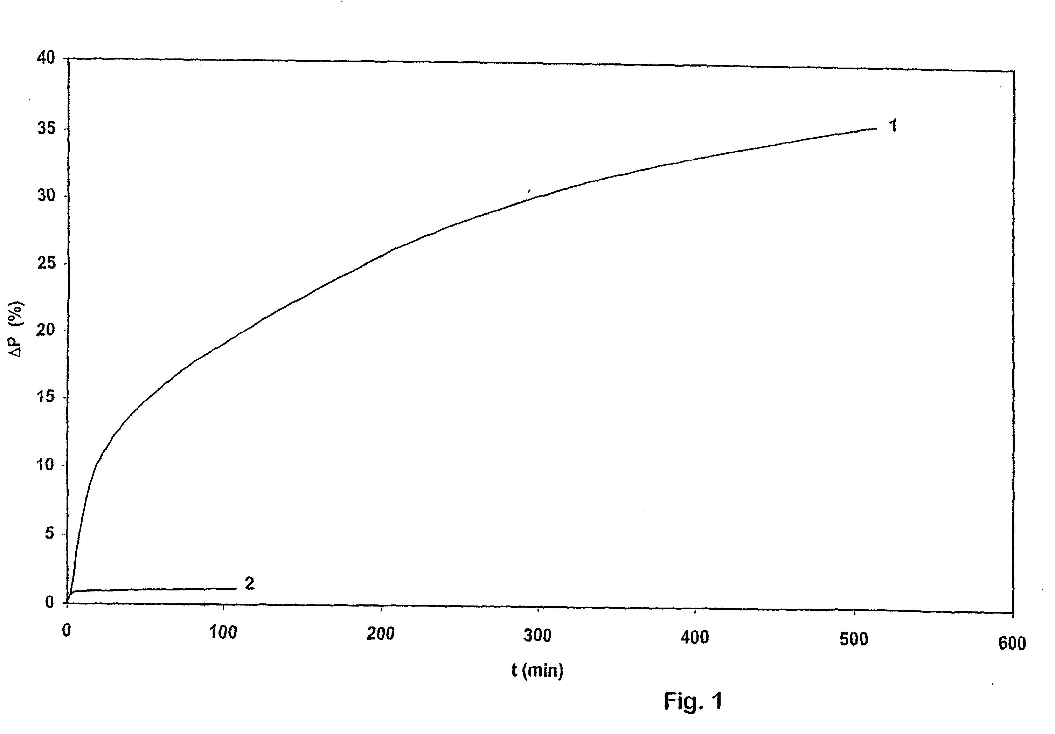

51 mg of powder are loaded into the sample holder of the thermobalance CAHN D 200. During the test, the temperature of the thermobalance measuring chamber is 25°C. By means of a rotary pump, the pressure in the measuring chamber is reduced to $10^{-5}$ mbar. Subsequently, the pump is excluded and, by means of a needle valve, water is introduced into the chamber up to a pressure of 5 mbar. The weight increase of the sample is recorded. The test result is plotted in a graph as curve I in figure 1, which reports the percent weight variation of the sample ($\Delta$P%) as a function of the time (t) in minutes.

## EXAMPLE 4 (COMPARATIVE)

This example refers to water sorption under vacuum by a commercial boron oxide sample.

The test of example 3 is repeated by using 291 mg of $B_2O_3$ of purity 99.98%, sold by the firm Aldrich, Milan, with a catalogue number 33,907-5. The test result is plotted in a graph as curve 2 in figure 1.

## EXAMPLE 5

This example relates to water sorption in an inert gas atmosphere by sample 1.

A gas purifier is prepared, formed of an AISI 304 steel cylindrical container having an internal volume of 15 ml, and end openings provided with fittings for the gas lines and sintered steel porous septa for the confinement of powders; the purifier inner chamber is filled with sample 1 powder. The purifier is slowly heated up to 140°C for 10 hours in a dry nitrogen flow, in order to allow complete degassing of the purifier walls. Subsequently, the purifier is allowed to cool to room temperature, and then the water sorption test is started. Nitrogen containing 7 ppm of water is allowed to pass through the purifier with a flow of 0.5 slpm. The gas from the purifier outlet is analyzed by a moisture analyzer Microdowser™ MD2, manufactured and sold by the applicant, which has a water detecting lower limit of 5 ppb. At the beginning of the test the quantity of water in the gas flow from the purifier outlet is lower than the instrument read limit. The test is continued until the Microdowser™ MD2 detects water at the outlet of the purifier, indicating that the purifier has lost its efficiency; this occurs after about 640 hours of continuous operation of the purifier; from the knowledge of the test parameters, the water capacity of the purifier is calculated, which is about 9 l/l (liters of sorbed water per liter of boron oxide bed). The test was repeated twice more, in both cases resulting in a water capacity value higher than 9 l/l.

## EXAMPLE 6

This example refers to water sorption in an inert gas atmosphere by boron oxide prepared as in example 2.

The test of example 5 is repeated, by loading the purifier with powder of sample 2. The purifier capacity turns out to be 4 l/l.

EXAMPLE 7 (COMPARATIVE)

This example refers to water sorption in an inert gas atmosphere by a commercial sample of boron oxide.

The test of example 5 is repeated by loading the purifier with 15 ml of $B_2O_3$ as used in example 4. The purifier capacity turns out to be about 0.5 l/l. The same test is repeated twice, giving the results of 0.9 and 0.3 l/l capacities.

EXAMPLE 8

This example refers to water sorption from a HCl flow by the boron oxide prepared in example 1.

A purifier is prepared as described in example 5. The purifier is subjected to a degassing treatment in a dry nitrogen flow at 140°C for 10 hours, then the water sorption test is started. A 0.2 slpm flow of a 1:1 by volume mixture of HCl and nitrogen containing 15 ppm of water is allowed to pass in the purifier. The outlet gas is analyzed with a Protege' FT-IR spectrophotometer, of the company Nicolet, Madison, WI, USA; the measuring chamber is the model 4Runner of the company CIC Photonics, Albuquerque, NM, USA. The use of the mixture HCl/nitrogen is rendered necessary by the analytic instrument employed. The instrument has a water detecting lower limit of 30 ppb. In parallel, also the gas being let into the purifier is analyzed, by deriving from the gas line entering the purifier a secondary line through which the water containing HCl is directly sent to the analyzer.

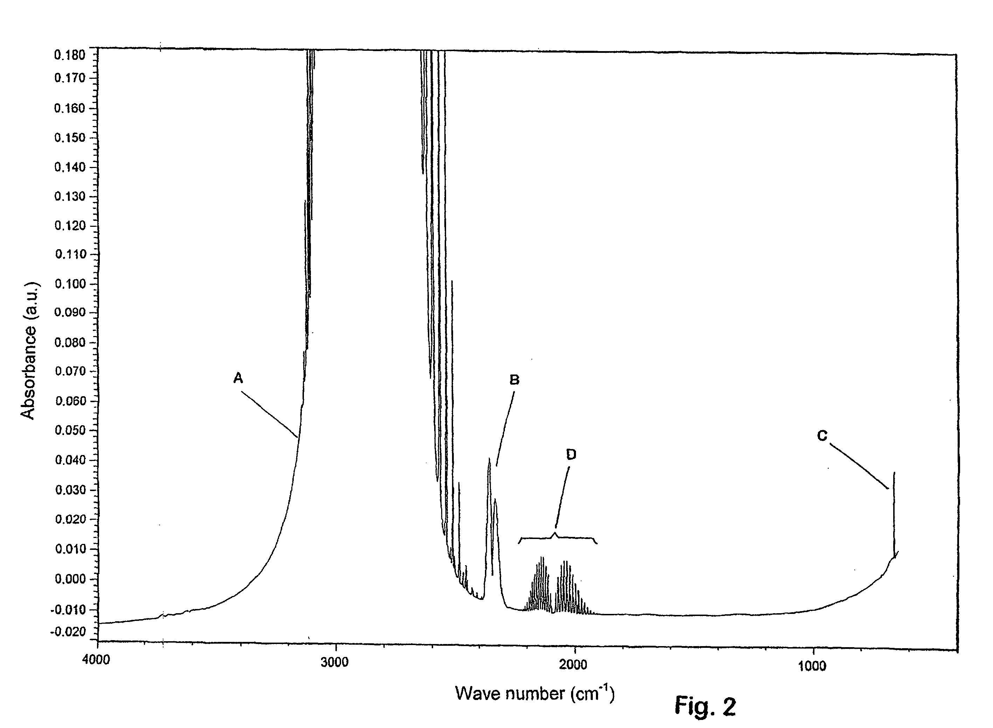

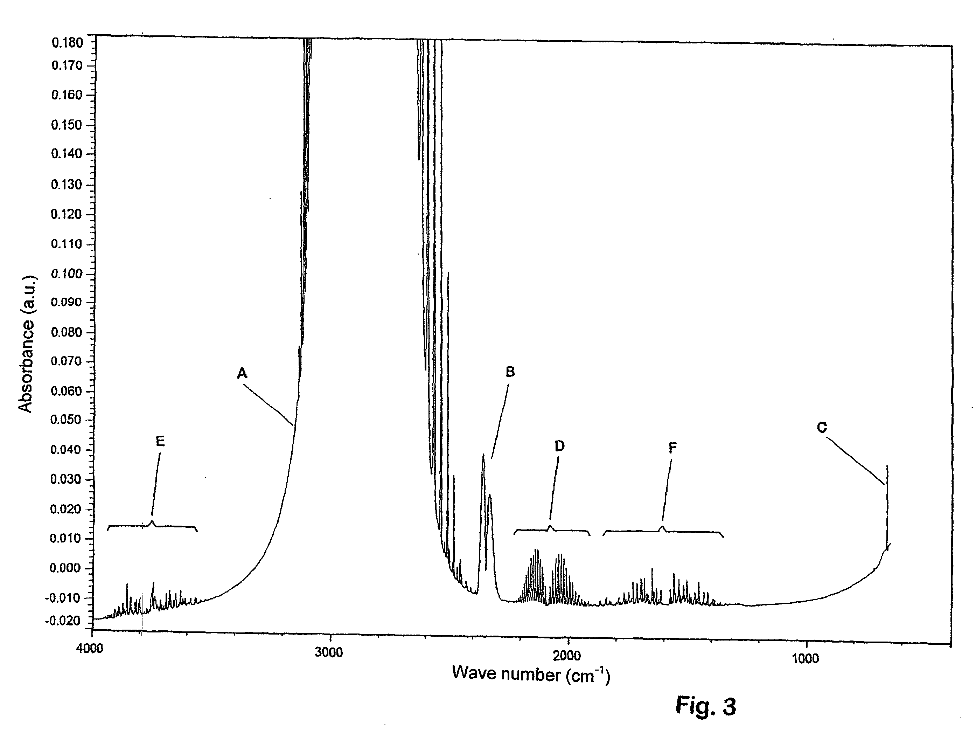

Figures 2 and 3 show, respectively, the spectra FT-IR of the gas flowing from and into the purifier. The spectra show the sample absorbance in arbitrary units (a.u.) as a function of the radiation wave number ($cm^{-1}$); both spectra show an intense peak (indicated with A in the graphs) assigned to HCl; a couple of peaks assigned to $CO_2$ (indicated with B in the graphs); an isolated peak assigned to $CO_2$ (C in the graphs); and a peak pattern (D in the graphs) of doubtful assignment, probably due to CO. The spectrum of Fig. 3, referred to the non-purified gas, further shows two peak patterns (E and F in the figure) assigned to water which are not present in the spectrum in figure 2, referred to the purified HCl, thus proving that the gas from the purifier outlet has a water content lower than the instrument detecting limit. The test was stopped when the purifier had sorbed an amount of 9 l/l of water with no water detected by the analytic instrument in the gas from the purifier outlet.

EXAMPLE 9

This example refers to the preparation of boron oxide by decomposition of boric acid inside a capsule.

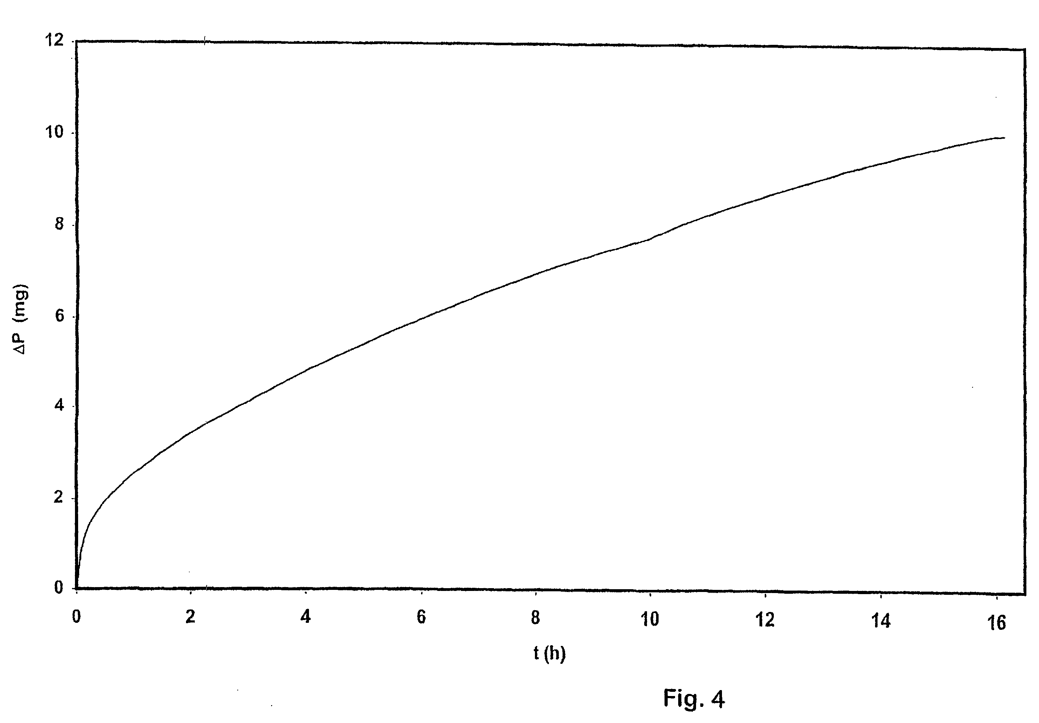

51 mg of boric acid employed in example 1 are loaded into a cylindrical container having the bottom closed and an internal diameter of 7,5 mm and height of 1,5 mm, made with AISI steel 304; the upper opening of the container is closed with a porous septum of sintered steel AISI 316 L, having a porosity of 1 µm. The resulting capsule is mounted on the sample-holder of a thermobalance CAHN model D 200. The thermobalance chamber is evacuated at a residual pressure of $10^{-4}$ mbar, and a thermal treatment of boric acid decomposition is started, which consists of heating the sample from room temperature to 105°C at a rate of 2°C/min, and of maintaining the temperature at 105°C for 23 hours. A weight loss of 20.3 mg, corresponding to 39.8%, is registered, slightly lower than the theoretical value of 43.7%; this difference can be ascribed to an incomplete decomposition of boric acid, due to the porous septum delaying water emission. The measuring chamber of the thermobalance is allowed to cool (still under pumping) to room temperature, and water is let in through a needle valve up to a pressure of 5 mbar. The weight increase of the sample at 25°C is registered. The result of the test is plotted in the graph as in figure 4, as weight increase in mg as a function of the time in hours; as it can be seen in the figure, after 16 hours of test the sample weight is increased of 10.3 mg, equal to about one half of the weight of water lost during boric acid decomposition.

From the analysis of the results of the above reported examples it can be appreciated that boron oxide obtained by thermal decomposition of boric acid at temperatures in the range of 70 to 200°C, under vacuum or under a dry gas flow, is effective in water removal, to levels lower than a few ppb, under vacuum, under inert and reactive gases; further, the comparison between FT-IR spectra of figures 2 and 3 shows that a gas purifier for water removal which employs the process of the invention does not release in the outlet gas impurities which come from reactions between the inlet gas and the materials of the same purifier, as it happens on the contrary by using processes of the known art.

**Claims**

1. A process for the removal of water from evacuated chambers or from gases comprising the following steps:

   - producing boron oxide by boric acid decomposition at a temperature in the range from 70 to 200°C, by operating in a reaction chamber under a dry gas flow or at a pressure lower than 500 mbar; and
   - contacting the resulting boron oxide with the evacuated volume or with the gas from which water has to be removed.

2. A process according to claim 1 wherein boric acid decomposition is carried out under a dry gas flow.

3. A process according to claim 2 wherein the flow rate is higher than 5xC cm$^3$/min, wherein C is the volume of the reaction chamber measured in cm$^3$.

4. A process according to claim 2 wherein the gas is nitrogen.

5. A process according to claim 1 wherein the decomposition of boric acid is carried out by laying boric acid in the reaction chamber in the form of beds of thickness not higher than 1 cm.

6. A process according to claim 1 wherein boric acid decomposition is carried out by laying boric acid inside a container which is permeable to gases, but able to seal out powders.

7. A process according to claim 1 wherein boron oxide is contacted with the gas from which water has to be removed at a temperature in the range of 0 to 120°C.

8. A process according to claim 1 wherein boron oxide is contacted with the evacuated volume at a temperature in the range of 0 to 80°C.

9. A process according to claim 1 wherein water is removed from a flow of halogen or halogenated gas selected among chlorine, hydrogen fluoride, hydrogen chloride, hydrogen bromide, silicon tetrachloride, trichlorosilane and dichlorosilane and mixtures thereof.

10. A process according to claim 1 for water removal from a sealed chamber, containing a controlled atmosphere of an inert gas, of an optical amplifier.

11. A process according to claim 1 for water removal from a gas flow by passing said gas flow through a purifier.

12. An optical amplifier for carrying out the process according to claim 10, comprising a sealed chamber wherein a laser source is contained and wherein a controlled atmosphere of an inert gas is maintained, further containing boron oxide laid in a container having a surface which is gas permeable but able to seal out powders.

13. An optical amplifier for carrying out the process according to claim 11, comprising boron oxide in a container with opening at two opposite ends, provided with fittings for gas lines and porous septa at said openings.

**Patentansprüche**

1. Verfahren zur Entfernung von Wasser aus evakuierten Kammern oder aus Gasen, das die folgenden Schritte umfasst:

   Produzieren von Boroxid durch Zersetzung von Borsäure bei einer Temperatur im Bereich von 70 bis 200 °C, indem in einer Reaktionskammer unter einem trockenen Gasstrom oder bei einem Druck unter 500 mbar gearbeitet wird; und

   Kontaktieren des resultierenden Boroxids mit dem evakuierten Volumen oder mit dem Gas, woraus Wasser entfernt werden soll.

2. Verfahren nach Anspruch 1, wobei die Zersetzung von Borsäure unter einem trockenen Gasstrom durchgeführt wird.

3. Verfahren nach Anspruch 2, wobei die Strömungsgeschwindigkeit höher als 5 x C cm$^3$/min ist, wobei C das in cm$^3$ gemessene Volumen der Reaktionskammer ist.

4. Verfahren nach Anspruch 2, wobei das Gas Stickstoff ist.

5. Verfahren nach Anspruch 1, wobei die Zersetzung von Borsäure durchgeführt wird, indem Borsäure in der Reaktionskammer in Form von Betten mit einer Dicke nicht höher als 1 cm ausgelegt wird.

6. Verfahren nach Anspruch 1, wobei die Zersetzung von Borsäure durchgeführt wird, indem Borsäure im Inneren eines Behälters ausgelegt wird, der für Gase durchlässig ist, jedoch Pulver dicht verschließen kann.

7. Verfahren nach Anspruch 1, wobei Boroxid bei einer Temperatur im Bereich von 0 bis 120 °C mit dem Gas kontaktiert wird, aus dem Wasser entfernt werden soll.

8. Verfahren nach Anspruch 1, wobei Boroxid mit dem evakuierten Volumen bei einer Temperatur im Bereich von 0 bis 80 °C kontaktiert wird.

9. Verfahren nach Anspruch 1, wobei Wasser aus einem Strom von Halogenen oder halogeniertem Gas ausgewählt aus Chlor, Fluorwasserstoff, Chlorwasserstoff, Bromwasserstoff, Siliziumtetrachlorid, Trichlorsilan und Dichlorsilan und Mischungen davon entfernt wird.

10. Verfahren nach Anspruch 1 zur Wasserentfernung aus einer verschlossenen Kammer, die eine kontrollierte Atmosphäre aus Inertgas enthält, von einem optischen Verstärker.

**11.** Verfahren nach Anspruch 1 zur Wasserentfernung aus einem Gasstrom, bei dem der Gasstrom durch einen Reiniger geleitet wird.

**12.** Optischer Verstärker zur Durchführung des Verfahrens nach Anspruch 10, der eine verschlossene Kammer umfasst, in der eine Laserquelle enthalten ist und in der eine kontrollierte Atmosphäre aus einem Inertgas aufrechterhalten wird, welche des Weiteren Boroxid enthält, das in einem Behälter mit einer Oberfläche ausgelegt ist, die gasdurchlässig ist, jedoch Pulver dicht verschließen kann.

**13.** Optischer Verstärker zur Durchführung des Verfahrens nach Anspruch 11, der Boroxid in einem Behälter mit Öffnungen an zwei entgegengesetzten Enden umfasst, die mit Anschlussstücken für Gasleitungen und porösen Scheidewänden an den Öffnungen ausgestattet sind.

## Revendications

**1.** Procédé d'élimination d'eau à partir de chambres mises sous vide ou à partir de gaz, comportant les étapes suivantes consistant à :

- produire de l'oxyde de bore par décomposition d'acide borique à une température dans la plage de 70 à 200°C, en réalisant ceci dans une chambre de réaction sous un écoulement de gaz sec ou à une pression inférieure à 500 mbar, et
- mettre en contact l'oxyde de bore résultant avec le volume mis sous vide ou avec le gaz à partir duquel l'eau doit être éliminée.

**2.** Procédé selon la revendication 1, dans lequel la décomposition d'acide borique est effectuée sous un écoulement de gaz sec.

**3.** Procédé selon la revendication 2, dans lequel le débit est supérieur à $5 \times C$ cm$^3$/min, où C est le volume de la chambre de réaction mesuré en cm$^3$.

**4.** Procédé selon la revendication 2, dans lequel le gaz est de l'azote.

**5.** Procédé selon la revendication 1, dans lequel la décomposition d'acide borique est effectuée en déposant de l'acide borique dans la chambre de réaction sous la forme de lits ayant une épaisseur qui n'est pas supérieure à 1 cm.

**6.** Procédé selon la revendication 1, dans lequel la décomposition d'acide borique est effectuée en déposant de l'acide borique à l'intérieur d'un conteneur qui est perméable aux gaz, mais capable de bloquer des poudres.

**7.** Procédé selon la revendication 1, dans lequel l'oxyde de bore est mis en contact avec le gaz à partir duquel l'eau doit être éliminée à une température dans la plage de 0 à 120°C.

**8.** Procédé selon la revendication 1, dans lequel l'oxyde de bore est mis en contact avec le volume mis sous vide à une température dans la plage de 0 à 80°C.

**9.** Procédé selon la revendication 1, dans lequel l'eau est éliminée d'un écoulement d'halogène ou d'un gaz halogéné sélectionné parmi le chlore, fluorure d'hydrogène, chlorure d'hydrogène, bromure d'hydrogène, tétrachlorure de silicium, trichlorosilane et dichlorosilane et des mélanges de ceux-ci.

**10.** Procédé selon la revendication 1, pour l'élimination d'eau à partir d'une chambre étanche, contenant une atmosphère commandée d'un gaz inerte, d'un amplificateur optique.

**11.** Procédé selon la revendication 1, pour l'élimination d'eau à partir d'un écoulement de gaz en faisant passer ledit écoulement de gaz à travers un dispositif de purification.

**12.** Amplificateur optique destiné à effectuer le procédé selon la revendication 10, comportant une chambre étanche dans laquelle une source laser est contenue et dans laquelle une atmosphère commandée d'un gaz inerte est maintenue, contenant de plus de l'oxyde de bore déposé dans un conteneur ayant une surface qui est perméable aux gaz mais capable de bloquer des poudres.

**13.** Amplificateur optique destiné à effectuer le procédé selon la revendication 11, comportant de l'oxyde de bore dans un conteneur ayant une ouverture sur deux extrémités opposées, munies de raccords pour des lignes de gaz et des diaphragmes poreux sur lesdites ouvertures.

Fig. 1

Fig. 2

Fig. 3

EP 0 960 647 B1

EP 0 960 647 B1

Fig. 4